# FASCICULE DE BREVET EUROPEEN

(11) **EP 1 519 213 B1**
(45) Date de publication et mention de la délivrance du brevet: **14.11.2007**
(21) Numéro de dépôt: 04104284.7
(22) Date de dépôt: 06.09.2004
(51) Int. Cl.: G02B 26/08

(54) **Micro-miroir oscillant à actionnement bimorphe**
Bimorph angetriebener, schwingender Mikrospiegel
Bimorphically actuated, oscillating micromirror

(30) Priorité: 08.09.2003 FR 0350509
(43) Date de publication de la demande: 30.03.2005
(73) Titulaire: COMMISSARIAT A L'ENERGIE ATOMIQUE, 75015 Paris (FR)
(72) Inventeur: FILHOL, Fabien, 38000, GRENOBLE (FR)
(74) Mandataire: Poulin, Gérard

(56) Documents cités:
- US-A- 5 969 465
- US-A1- 2002 020 810
- US-A1- 2002 021 860
- US-A1- 2002 118 472
- YAMADA K ET AL: "A novel asymmetric silicon micro-mirror for optical beam scanning display" MICRO ELECTRO MECHANICAL SYSTEMS, 1998. MEMS 98. PROCEEDINGS., THE ELEVENTH ANNUAL INTERNATIONAL WORKSHOP ON HEIDELBERG, GERMANY 25-29 JAN. 1998, NEW YORK, NY, USA,IEEE, US, 25 janvier 1998 (1998-01-25), pages 110-115, XP010270215 ISBN: 0-7803-4412-X
- MICHEL BRISSAUD, SARAH LEDREN, P GONNARD: "Modelling of a cantilever non-symmetric piezoelectric bimorph" J. OF MICROMECHANICS AND MICROENGINEERING, no. 13, 9 juillet 2003 (2003-07-09), pages 832-844,

## Description

### DOMAINE TECHNIQUE

La présente invention concerne un micro-miroir apte à fonctionner en mode oscillant grâce à un actionnement bimorphe.

Les micro-miroirs issus des techniques de micro-usinage de matériaux semi-conducteurs se développent de plus en plus car ils présentent un intérêt tout particulier pour la déflexion de faisceaux lumineux grâce à la combinaison de leur rapidité, de leur précision, de leur faible consommation énergétique et de leur faible coût de fabrication.

De tels micro-miroirs comportent une partie mobile globalement en forme de plateau apte à osciller autour d'un axe de torsion solidaire d'une partie fixe. La partie mobile comporte une zone réfléchissante pour défléchir un faisceau lumineux pointé sur elle.

Dans ce mode de fonctionnement, la partie mobile est destinée à osciller à sa fréquence de résonance, le faisceau lumineux réfléchi réalise alors un balayage périodique avec une période augmentée par le phénomène de résonance mécanique.

Le domaine d'application de ces micro-miroirs est par exemple les scanners dans les imprimantes, les lecteurs de codes-barres. Dans ce mode de fonctionnement, les micro-miroirs peuvent également être utilisés dans de nouvelles applications telles les affichages par balayage de faisceau lumineux sur la rétine ou les microscopes confocaux endoscopiques.

### ÉTAT DE LA TECHNIQUE ANTERIEURE

De tels micro-miroirs comportent classiquement une partie mobile, généralement en forme de plateau, dotée d'un plan principal et possédant au moins une zone réfléchissante, une partie fixe, deux bras de torsion issus de la partie mobile, reliés à la partie fixe, matérialisant un axe sensiblement parallèle au plan principal, des moyens de commande de l'oscillation de la partie mobile autour de l'axe.

La qualité optique des micro-miroirs dépend essentiellement de la planéité de leur zone réfléchissante. La partie mobile comporte généralement un plateau micro-usiné en matériau semi-conducteur formant la zone réfléchissante ou recouvert d'au moins une couche réfléchissante et éventuellement d'une couche de protection. Les déformations de surface peuvent être induites par des éléments se trouvant sous la zone réfléchissante, les contraintes dans la ou les couches superficielles de la partie mobile (par exemple la couche métallique réfléchissante ou la couche de protection) et les déformations dynamiques qui se produisent pendant le déplacement de la partie mobile.

L'utilisation du silicium monocristallin ou polycristallin d'épaisseur de quelques dizaines de micromètres permet d'obtenir des parties mobiles ayant une planéité satisfaisante. Une telle gamme d'épaisseurs permet d'éviter les déformations engendrées par une accélération lors d'un mouvement ou par les contraintes apportées par la ou les couches superficielles.

La taille de la zone réfléchissante doit être suffisante pour limiter l'effet de diffraction du faisceau lumineux sur son ouverture. On utilise typiquement des micro-miroirs de plus de 500 micromètres d'envergure.

Bien sûr de telles dimensions ne sont pas limitatives, elles dépendent en fait de l'application.

Le document : "A novel asymetric silicon micro-mirror for optical beam scanning display", K. Yamada and T. Kuriyama, Proceedings MEMS 98, IEEE, pages 110-115, décrit un micro-miroir asymétrique à actionnement bimorphe piézoélectrique. La figure 1 montre en trois dimensions un tel micro-miroir. Les figures 2A, 2B, 2C, 2D sont des vues de la partie mobile permettant d'expliquer son mouvement d'oscillation et la figure 3 est un graphique montrant la variation de l'angle d'inclinaison θ, du déplacement vertical δz et de l'accélération d²z/dt² de la partie mobile en fonction du temps.

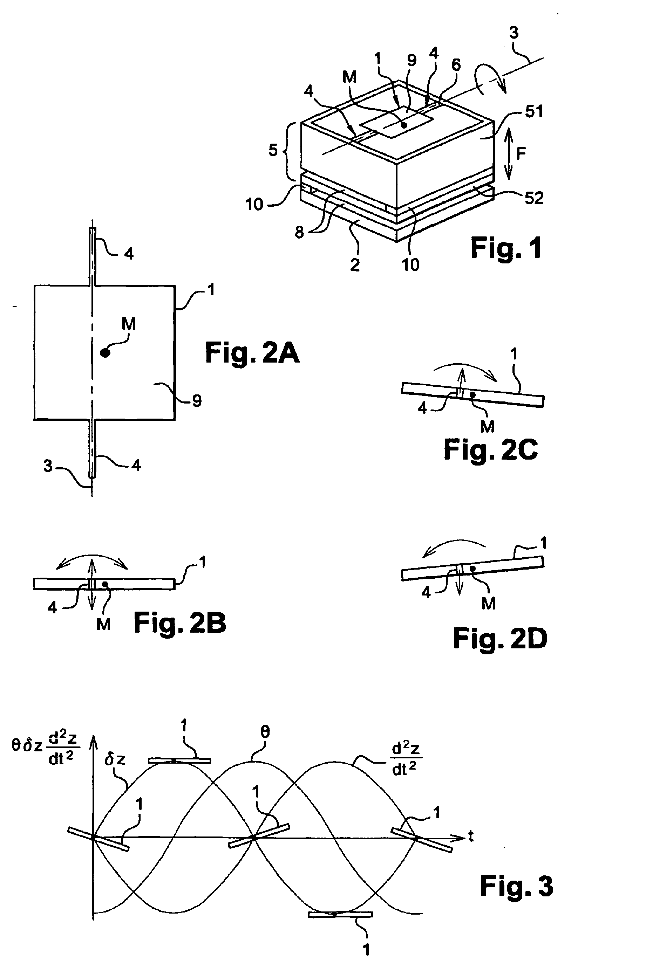

On se réfère à la figure 1. Le micro-miroir comporte une partie mobile 1 et une partie fixe 2. La partie mobile 1 prend globalement la forme d'un plateau. Elle est destinée à se déplacer en oscillant autour d'un axe 3. L'axe 3 passe par la partie mobile 1 en étant décalé de son centre de masse M et est sensiblement parallèle à un plan principal de la partie mobile 1. Si la partie mobile 1 est un plateau d'épaisseur constante, le centre de masse M est confondu avec le centre géométrique de la partie mobile 1.

Deux bras de torsion 4 relient la partie mobile 1 à la partie fixe 2 via des moyens d'actionnement bimorphe 5 de type piézoélectrique. De tels moyens d'actionnement bimorphe de type piézoélectrique comportent une partie apte à changer de volume sous l'effet d'une excitation. Les bras de torsion 4 matérialisent l'axe 3. Ils sont issus de la partie mobile 1. Ces bras de torsion 4 sont placés dans le prolongement l'un de l'autre. Ils ont une extrémité 6 solidaire par encastrement d'un cadre 51 qui est fixé par collage sur une face d'une plaque 52 en céramique piézoélectrique. Cette plaque 52 est appelée élément bimorphe. L'autre face de l'élément bimorphe 52 en céramique piézoélectrique est collée à la partie fixe 2 qui prend la forme d'une plaque. L'élément bimorphe 52 en céramique piézoélectrique et le cadre 51 auquel il est collé contribuent à former les moyens d'actionnement bimorphe 5. L'élément bimorphe 52 en céramique piézoélectrique et le cadre 51 sont relativement épais et le cadre 51 est rigide. Le collage entre l'élément bimorphe 52 en céramique piézoélectrique et le cadre 51 se fait par l'intermédiaire d'un espaceur qui suit un premier bord du substrat et le collage entre l'élément bimorphe en céramique piézoélectrique et la partie fixe se fait par l'intermédiaire d'un autre espaceur qui suit un second bord du substrat opposé au premier bord.

Grâce à ces espaceurs qui portent la référence 10, des espaces 8 sont aménagés de part et d'autre de l'élément bimorphe 52 en céramique piézoélectrique. Cette structure ne forme pas un empilement plein à cause de la présence des espaces 8. Les espaces permettent au matériau piézoélectrique de vibrer librement.

Des moyens d'excitation (non visibles) coopèrent avec l'élément bimorphe 52 en céramique piézoélectrique pour le soumettre à un champ électrique visant à faire varier son volume. La variation du volume peut être induite par une expansion ou une contraction de la céramique piézoélectrique. Le champ électrique est sensiblement perpendiculaire aux faces principales de l'élément bimorphe 52 en céramique piézoélectrique et donc au plan principal de la partie mobile 1 en position au repos. Sur la figure 1, la partie mobile 1 est au repos.

Grâce au cadre 51 et aux bras de torsion 4 la partie mobile 1 est ainsi suspendue au-dessus de la partie fixe 2. La partie mobile 11 comporte des faces principales dont une est tournée vers la partie fixe 2 et dont l'autre est dotée d'une zone réfléchissante 9 destinée à réfléchir de la lumière.

Lorsque l'élément bimorphe 52 en céramique piézoélectrique est soumis à un champ électrique alternatif, dirigé verticalement, produit par le couple d'électrodes, il se met à vibrer verticalement (dans la direction de la double flèche F). Il entraîne dans ce mouvement le cadre 51 auquel il est collé et les bras de torsion 4. Le cadre 51 étant rigide et n'étant pas accolé à l'élément bimorphe en matériau piézoélectrique 52 à cause de la présence de l'espaceur 10 et de l'espace 8, il ne se déforme pas mais est seulement entraîné dans son ensemble dans un mouvement de vibration vertical. Les bras de torsion 4 étant décalés par rapport au centre de masse M de la partie mobile 1, la dissymétrie de la répartition des masses autour de l'axe 3 va générer un couple entraînant la partie mobile 1 dans un mouvement d'oscillation autour de l'axe 3. Le micro-miroir est alors dans un état activé. Les figures 2A à 2D illustrent diverses positions de la partie mobile 1. Sur les figures 2A et 2B, elle est dans une position médiane qui correspond à sa position au repos. Sur la figure 2C, on suppose qu'elle est dans une position extrême, inclinée d'un côté de l'axe et sur la figure 2D, on suppose qu'elle est dans une position extrême inclinée de l'autre côté de l'axe.

Le mouvement d'oscillation de la partie mobile 1 est synchrone de l'excitation des moyens d'actionnement bimorphe 5. Lorsque l'excitation a une fréquence qui est la fréquence de résonance mécanique de la partie mobile 1, l'amplitude d'oscillation de la partie mobile est maximisée.

Sur la figure 3, on peut voir les déphasages existants entre l'angle d'inclinaison θ de la partie mobile 1, le déplacement vertical δz de l'élément bimorphe en céramique piézoélectrique 52 et son accélération d²z/dt². La position au repos de la partie mobile 1, dans laquelle elle est sensiblement horizontale, correspond à un angle d'inclinaison θ nul. La position prise par la partie mobile 1 est matérialisée pour plusieurs instants caractéristiques.

Ces micro-miroirs sont donc destinés à osciller autour d'un axe 3 sensiblement parallèle à un plan principal de leur partie mobile.

Un inconvénient d'une telle structure est lié au collage de l'élément bimorphe en céramique piézoélectrique sur le cadre. Ce collage ne peut se faire que sur un cadre relativement rigide donc assez épais, s'il est fragile, le collage est délicat. La rigidité du cadre fait qu'il est massif et lourd et qu'il est difficile de l'entraîner en mouvement sous l'action de la variation de volume de l'élément bimorphe en céramique piézoélectrique. Il faut fournir une force importante et donc prévoir des moyens d'actionnement bimorphe plus volumineux.

La fabrication d'une pluralité de tels micro-miroirs se fait simultanément de manière collective par les techniques de la microélectronique et du micro-usinage sur un substrat commun. Le collage des éléments bimorphes en céramique piézoélectrique ne peut être collectif. Il faut les rapporter individuellement pour les coller, ce qui augmente considérablement le coût de fabrication.

Un autre inconvénient est que le collage de céramiques piézoélectriques au cadre, notamment s'il est en silicium monocristallin, et à la plaque de la partie fixe 2 peut s'avérer assez compliqué à cause de la petitesse des objets à aligner et à coller entre eux.

Encore un autre inconvénient est que les bras de torsion ne se trouvent pas à un endroit où l'amplitude du mouvement est maximale. Il aurait fallu qu'ils soient fixés au cadre de manière à être le plus loin possible de l'espaceur qui maintient le cadre à l'élément bimorphe en céramique piézoélectrique. L'amplitude de l'oscillation de la partie mobile est donc limitée.

L'article « Modelling of a cantilever non-symmetric piezoelectric bimorph » Journal of micromechanics and microengineering, 13 (2003) pages 832-844 montre un actionneur doté de moyens d'actionnement bimorphe.

La demande de brevet US 2002/002/860 montre un micromiroir avec une partie mobile, une partie fixe et des bras de torsion issus de la partie mobile et fixés à la partie fixe. Il n'y a pas de moyens d'actionnement bimorphe.

Le brevet US 5 969 465 montre un oscillateur à torsion de type miroir. Il n'y a pas de moyens d'actionnement bimorphe pour chaque bras de torsion.

### EXPOSÉ DE L'INVENTION

La présente invention a pour but de proposer un micro-miroir apte à osciller autour d'un axe par effet bimorphe ne présentant pas les limitations et difficultés ci-dessus.

Plus précisément un but de l'invention est de proposer un micro-miroir apte à être fabriqué collectivement par les techniques de la microélectronique et du micro-usinage à un coût moindre que celui de l'art antérieur.

Pour y parvenir la présente invention propose un micro-miroir tel que défini dans la revendication 1 ainsi que d'autres caractéristiques énnoncées dans la revendication 1.

Le matériau actif peut être un matériau piézoélectrique, un matériau magnétostrictif, un matériau à effet thermique ayant un coefficient d'expansion thermique suffisamment différent de celui du matériau de la structure souple passive, un alliage à mémoire de forme.

Les moyens d'actionnement bimorphe incluent des moyens d'excitation de la partie en matériau actif.

Il est préférable qu'un bras de torsion soit relié à la structure souple passive.

Pour maximiser l'amplitude de l'oscillation, il est préférable que la liaison du bras de torsion à la structure souple passive se fasse dans une zone à forte déformation sous l'effet du changement de volume et/ou de forme de la partie en matériau actif, induit par l'excitation.

La partie en matériau actif et la structure souple passive présentent un recouvrement total ou partiel. Dans le but de maximiser l'amplitude des oscillations, il est préférable que le recouvrement partiel se fasse dans une zone à forte déformation de la structure souple passive.

La structure souple passive peut prendre la forme d'une membrane fixée à la partie fixe par au moins une portion de bord et ayant au moins une autre portion de bord libre sur laquelle est fixé un bras de torsion.

La membrane peut être sensiblement un demi-disque avec un bord arrondi et un bord droit, le bord droit étant libre et le bord arrondi étant fixé à la partie fixe.

La partie en matériau actif peut aussi être sensiblement en forme de demi-disque avec un bord droit sensiblement aligné et centré sur celui de la membrane.

Toujours dans le but de maximiser l'amplitude des oscillations, le bord droit du demi-disque de la partie en matériau actif vaut environ 2/5 du bord droit de la membrane.

En variante, la structure souple passive peut prendre la forme d'une poutre dont les extrémités sont fixées à la partie fixe, un bras de torsion étant fixé sensiblement dans une zone centrale de la poutre.

Toujours dans le but de maximiser l'amplitude des oscillations, la partie en matériau actif peut occuper la zone centrale de la poutre en laissant à nu, chaque extrémité, sur environ 1/6 de la longueur de la poutre.

La présente invention concerne également un procédé de fabrication d'un micro-miroir ainsi caractérisé tel que défini dans la revendication 13. Il peut comporter les étapes suivantes :
a) réalisation pour chaque bras de torsion, sur une couche semi-conductrice superficielle d'un substrat semi-conducteur formé d'une couche isolante enterrée entre une couche semi-conductrice de base et la couche semi-conductrice superficielle, de la partie en matériau actif associée éventuellement aux moyens d'excitation,
b) délimitation par gravure dans la couche semi-conductrice superficielle du contour de la partie mobile, des bras de torsion, de la structure souple passive en s'arrêtant sur la couche isolante enterrée,
c) élimination de la couche semi-conductrice de base et de la couche isolante enterrée sous et autour de la partie mobile, des bras de torsion et sous une partie de la structure souple passive de manière à libérer la partie mobile et les bras de torsion, à autoriser une déformation de la structure souple passive et à créer la partie fixe dans le reste de la couche semi-conductrice de base et de la couche isolante enterrée.

On peut réaliser la zone réfléchissante sur la couche semi-conductrice superficielle, par dépôt d'un matériau réfléchissant et délimitation de son contour avant l'étape b).

Lorsque le matériau actif est piézoélectrique ou à effet thermique, on peut réaliser en tant que moyens d'excitation, une première électrode entre la couche semi-conductrice superficielle et la partie en matériau actif, et une seconde électrode au-dessus de la partie en matériau actif.

On peut insérer une base isolante entre la première électrode et la couche semi-conductrice superficielle.

On peut insérer une autre base isolante entre la première électrode et la seconde électrode pour les isoler l'une de l'autre.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1 (déjà décrite) montre en trois dimensions un micro-miroir de l'art antérieur à actionnement bimorphe ;
Les figures 2A à 2D (déjà décrites) montrent de face et en coupe diverses positions prises par la partie mobile du micro-miroir lors de son actionnement ;
La figure 3 (déjà décrite) est un graphique montrant les variations en fonction du temps de l'angle d'inclinaison θ de la partie mobile du micro-miroir de la figure 1, du déplacement vertical de l'élément bimorphe en céramique piézoélectrique, et de son accélération ;

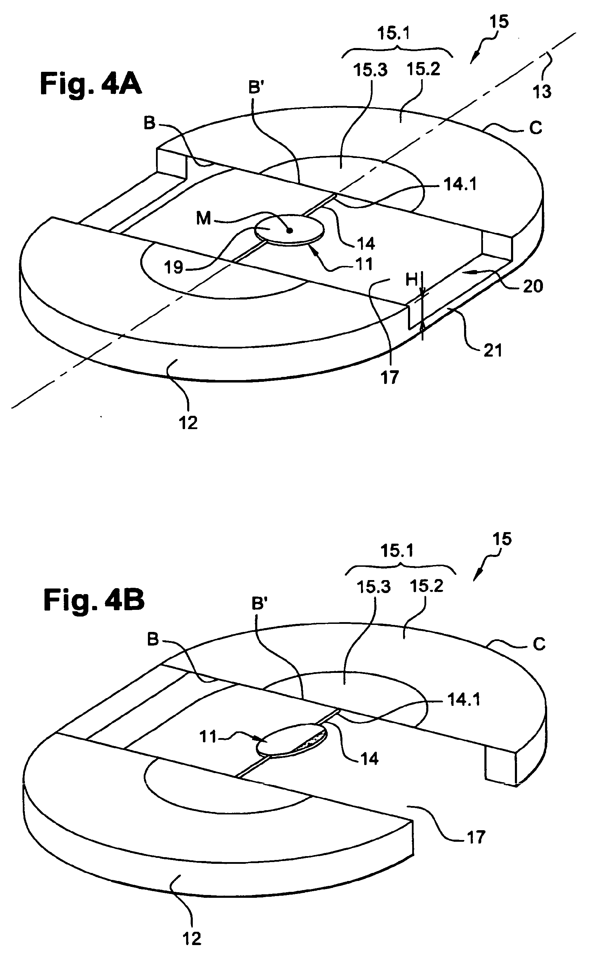

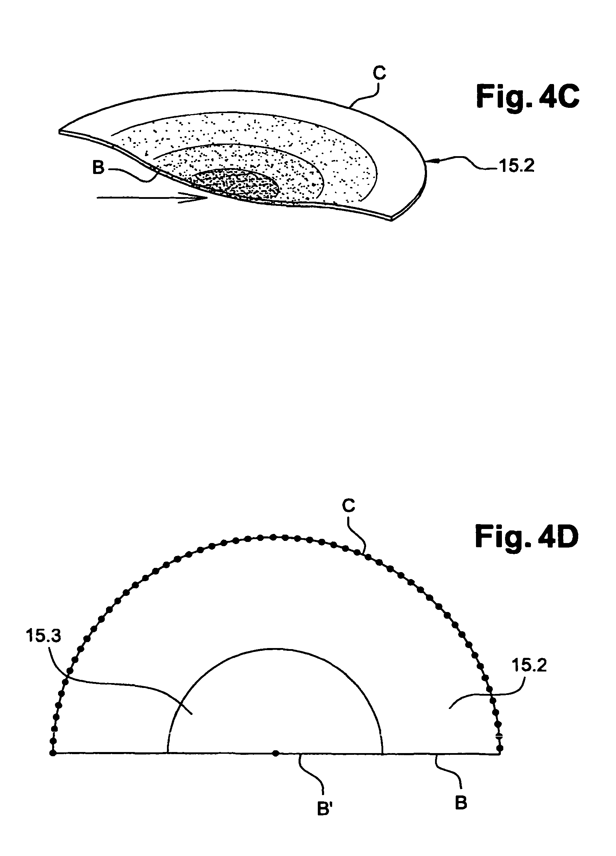

Les figures 4A, 4B, 4C, 4D montrent respectivement, une vue globale d'un premier exemple et d'un second exemple de micro-miroir selon l'invention, les déformations de l'une de leurs membranes et une vue de dessus de leurs moyens d'actionnement bimorphe ;

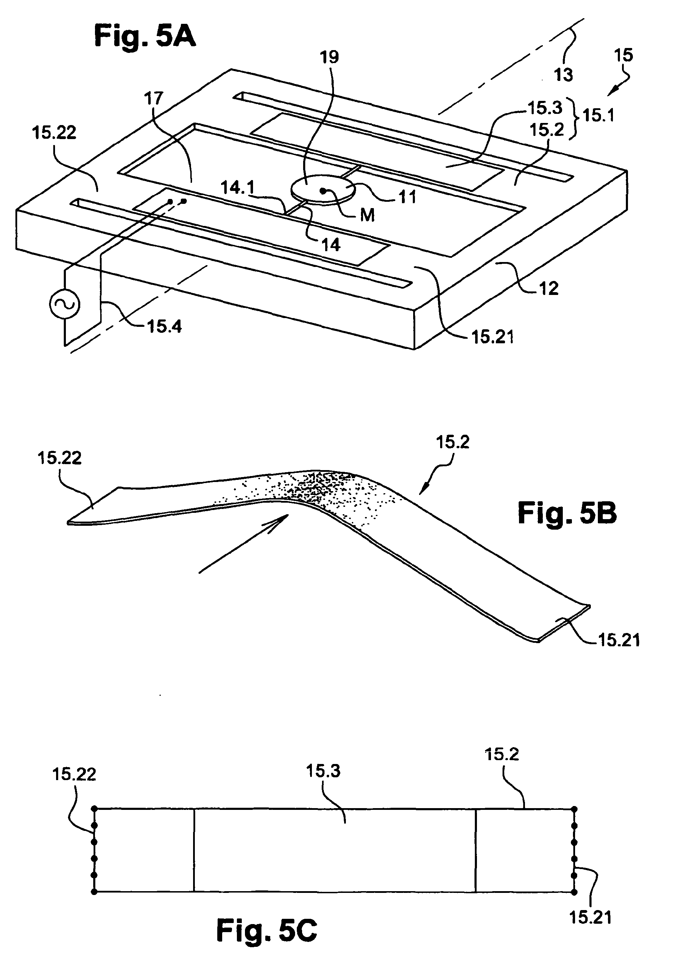

Les figures 5A, 5B, 5C montrent respectivement, une vue globale d'un autre exemple d'un micro-miroir selon l'invention, les déformations de l'une de ses poutres et une vue de dessus de ses moyens d'actionnement bimorphe ;

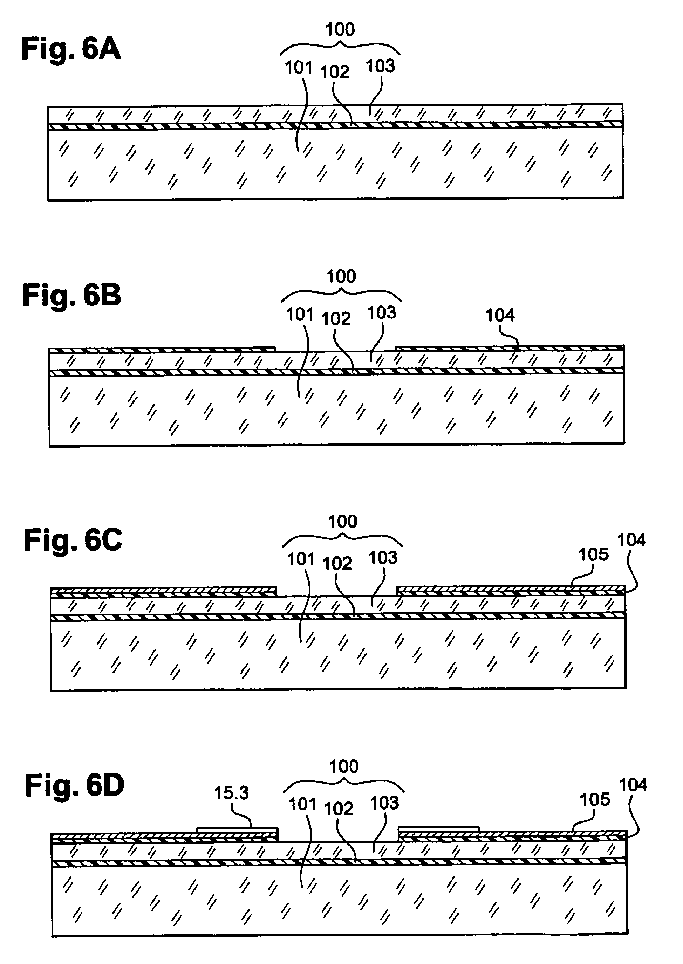

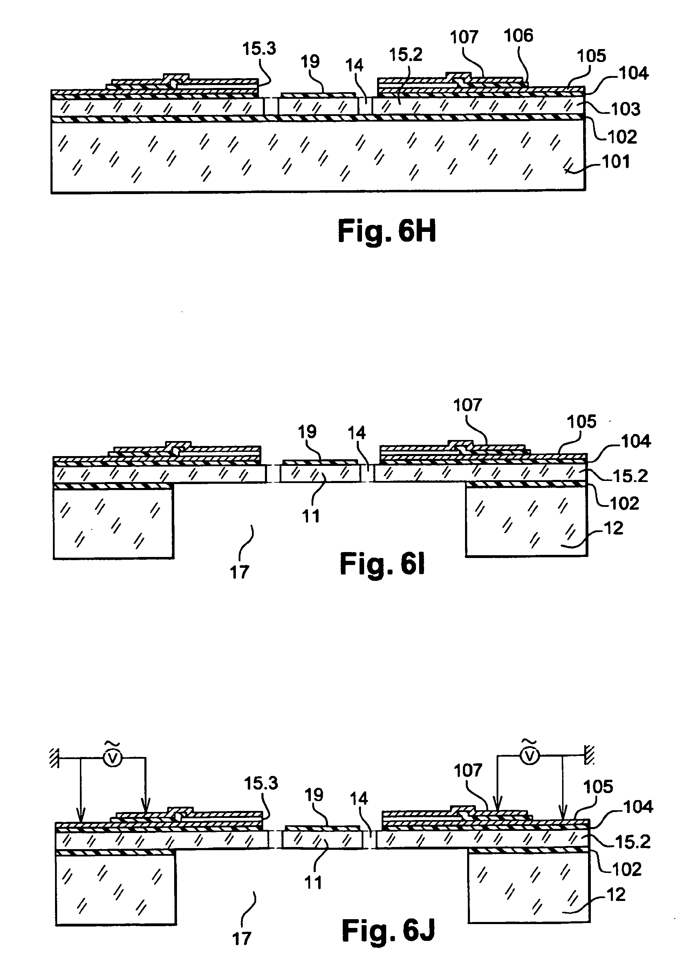

Les figures 6A à 6J montrent différentes étapes d'un exemple de procédé de réalisation d'un micro-miroir selon l'invention à actionnement bimorphe notamment de type piézoélectrique.

Les différentes variantes doivent être comprises comme n'étant pas exclusives les unes des autres.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On se réfère à la figure 4A qui montre un exemple de micro-miroir selon l'invention. Ce micro-miroir comporte une partie mobile 11 avec une zone réfléchissante 19, une partie fixe 12, deux bras de torsion 14 issus de la partie mobile 11 matérialisant un axe 13 autour duquel la partie mobile 11 est apte à osciller. La partie mobile 11 est sensiblement en forme de plateau. L'axe 13 est sensiblement parallèle à un plan principal de la partie mobile 11, il passe par la partie mobile 11 et est décalé par rapport au centre de masse M de la partie mobile 11. Cela signifie que l'axe 13 n'est pas un axe de symétrie de la partie mobile 11. Le micro-miroir est dit asymétrique.

Chacun des bras de torsion 14 a une extrémité 14.1 reliée à la partie fixe 12 par l'intermédiaire de moyens d'actionnement bimorphe 15. Les moyens d'actionnement bimorphe 15 comportent, au niveau de l'extrémité 14.1 de chaque bras de torsion 14, un empilement 15.1 plein avec des couches déposées ou rapportées comprenant une partie en matériau actif 15.3 coopérant avec une structure souple passive 15.2. L'empilement 15.1 est aussi appelé bimorphe. On entend par couche rapportée une couche qui se trouve sur une plaquette et que l'on vient coller sur une autre plaquette avant de retirer la base de la première plaquette. Cette technique de report est tout à fait classique dans les microsystèmes.

Dans cette invention, on entend par matériau actif, un matériau qui est apte à changer de volume et/ou de forme sous l'effet d'une excitation. Le fait de faire coopérer, dans un empilement plein, un tel matériau actif avec une structure souple passive permet d'obtenir une déformation à l'interface, cette déformation se transmettant dans la structure passive qui, si elle est souple, se déforme à son tour. Comme matériau actif, on peut utiliser un matériau piézoélectrique comme par exemple de l'oxyde de zinc (ZnO), du zirconate titanate de plomb (Pb(Zr52,Ti48,)O₃) connu sous le sigle PZT, ou du polyvinylidène difluoride connu sous le sigle PVDF. Ces matériaux changent de volume lors d'une excitation. Le changement de volume n'est pas isotrope et il y a donc également changement de forme. Le signal d'excitation à appliquer à un matériau piézoélectrique pour le faire changer de volume est un champ électrique induit par exemple entre deux électrodes situées de part et d'autre du matériau piézoélectrique. Des moyens d'actionnement bimorphe avec comme matériau actif un matériau piézoélectrique procurent en général des déplacements modestes, mais fournissent des forces importantes pour des tensions d'excitation modérées. L'effet piézoélectrique est très rapide (par exemple jusqu'à quelques giga Hertz).

On peut utiliser comme matériau actif apte à changer de volume un matériau dit à effet thermique ayant un coefficient d'expansion thermique suffisamment différent de celui de la structure souple passive. Le matériau utilisé peut être par exemple de l'oxyde de zinc si le matériau de la structure souple passive est du silicium.

L'excitation à appliquer à un tel matériau actif à effet thermique est une variation de température, provoquée par exemple, par du chauffage par effet Joule provenant d'au moins une résistance accolée au matériau actif ou placée dans son voisinage. L'oxyde de zinc possède une résistivité de l'ordre de 10⁴ ohms.cm. On peut en variante faire circuler dans le matériau actif un courant (environ quelques ampères) pour provoquer son échauffement par effet Joule. Cela provoque une expansion du matériau actif et cette expansion est plus importante que celle de la structure passive souple avec laquelle il coopère. Lorsque le courant diminue, le refroidissement par dissipation de chaleur fait revenir le matériau actif au repos. De tels matériaux à effet thermique fournissent de grandes forces et des déplacements importants. Toutefois ils sont limités à des fréquences relativement faibles, typiquement allant jusqu'au kilo Hertz.

Des matériaux magnétostrictifs sont aussi des matériaux actifs. Comme matériau magnétostrictif on peut citer le Terfenol-D (marque déposée de la société Naval Surface Warfare Center anciennement Naval Ordinance Labs) qui est un alliage de fer (Fe), de terbium (Tb) et de dysprosium (Dy). Ces matériaux utilisent l'effet de magnétostriction géante qui provoque un changement de volume lorsqu'ils sont soumis à un champ magnétique extérieur. L'excitation est provoquée par un champ magnétique qui peut être induit par un aimant ou un bobinage parcouru par un courant par exemple. Les matériaux magnétostrictifs ont une réponse rapide (de l'ordre de la microseconde). Le signal d'excitation n'a pas besoin d'avoir recours à des pistes conductrices et/ou électrodes comme dans les autres cas, ce qui simplifie l'agencement. Les moyens d'excitation peuvent être externes au bimorphe. Il suffit d'utiliser un aimant.

Les alliages à mémoire de forme sont aussi des matériaux actifs. Ils changent de forme lorsqu'ils sont soumis à une excitation. Un alliage de titane (Ti) et de nickel (Ni) peut être employé. Un tel alliage peut se déposer aisément en couches minces. Ces matériaux utilisent un effet de changement de phase cristalline qui provoque un changement de forme lors d'un changement de température. Cette déformation est réversible lors du refroidissement. L'excitation peut être provoquée par exemple par du chauffage induit par une résistance thermique accolée au matériau ou placée dans son voisinage. Ces matériaux à mémoire de forme peuvent provoquer de grands déplacements avec des forces importantes mais ils sont lents. Ils sont limités à des fréquences allant typiquement jusqu'à environ 100 Hertz.

Lorsqu'un signal d'excitation approprié est appliqué sur ou au voisinage du matériau actif, il va donc se déformer en compression ou en expansion selon le sens du signal d'excitation appliqué (sens du champ électrique, sens du champ magnétique, sens de la variation de température). Les figures 4 ne montrent pas de moyens d'excitation de la partie en matériau actif dans un souci de clarté. Leur installation ne pose pas de problème à un homme du métier. Par contre de tels moyens sont esquissés sur la figure 5A avec la référence 15.4.

Par effet bimorphe, la structure souple passive 15.2 va se fléchir dans un sens ou dans l'autre en suivant le mouvement induit par la déformation engendrée par le changement de volume et/ou de forme de la partie 15.3 en matériau actif.

Lorsque l'excitation produit une déformation alternative verticale du matériau actif, une accélération verticale va s'appliquer à l'extrémité 14.1 des bras de torsion 14 transmise par la structure souple passive et la dissymétrie de la répartition des masses de la partie mobile 11 autour de l'axe 13 en torsion va générer un couple qui va déplacer la partie mobile 11 en rotation. La rotation de la partie mobile 11 est synchrone de l'excitation appliquée à la partie en matériau actif et quand l'excitation est à la fréquence de résonance mécanique de la partie mobile 11, l'amplitude d'oscillation de la partie mobile 11 est maximisée.

Lorsque l'on déplace le centre de masse M de la partie mobile 11, on facilite l'excitation de mode de résonance en torsion par rapport aux autres modes mécaniques (oscillation dans le plan, oscillations verticales). Ces autres modes sont parasites pour la fonction recherchée.

On peut se référer à la figure 4B qui montre la partie mobile 11 en position inclinée dans un état activé. L'endroit grisé permet de repérer la zone de la partie mobile 11 ayant la plus grande amplitude en mouvement. Il s'agit de son bord le plus éloigné de l'axe 13.

Dans un empilement 15.1, la liaison entre bras de torsion 14 et partie fixe 12 se fait au niveau de la structure souple passive 15.2. La structure souple 15.2 peut être réalisée par une membrane fixée à la partie fixe 12 par au moins une portion de bord et ayant au moins une autre portion de bord qui est libre. Ainsi elle peut se déformer. L'extrémité libre 14.1 d'un bras de torsion 14 est attachée sur la portion de bord qui est libre. Au niveau de la portion de bord libre la membrane 15.2 est en surplomb.

Dans l'exemple des figures 4A, 4B, la structure souple passive 15.2 est une membrane sensiblement en demi-disque avec un bord arrondi C et un bord droit B (qui correspond sensiblement à un diamètre du disque conduisant au demi-disque). Le bord arrondi C est encastré dans la partie fixe 12. Le bord droit B est le bord libre. Ses deux extrémités qui sont communes avec le bord arrondi C sont fixées à la partie fixe 12.

La partie en matériau actif 15.3 est formée d'au moins une couche mince de matériau actif qui s'étend sur la membrane 15.2. Elle a été déposée ou a été rapportée sur la membrane 15.2, par exemple, par un procédé de dépôt physique (tel que la pulvérisation cathodique par exemple) ou chimique (tel que le dépôt en phase vapeur, l'évaporation de solutions par exemple). Il n'y a pas d'espace entre les deux, mais éventuellement on peut trouver une électrode ou une piste conductrice, des moyens d'excitation et/ou de l'isolant. La partie en matériau actif 15.3 peut recouvrir totalement la membrane 15.2 mais ce n'est pas une obligation. Il suffit qu'elle la recouvre dans une zone fortement déformée notamment au niveau de la jonction entre l'extrémité du bras de torsion et la membrane pour que l'amplitude d'oscillation soit importante.

Dans l'exemple des figures 4, la partie en matériau actif prend également la forme sensiblement d'un demi-disque dont le bord droit B' est sensiblement aligné et centré sur celui B de la membrane 15.2. Les deux demi-disques sont superposés. Par centré on entend que les milieux des bords droits sont l'un au-dessus de l'autre.

La figure 4C montre la déformation de la membrane 15.2 en demi-disque sous l'effet d'une sollicitation de la partie en matériau actif 15.3. Elle prend la forme d'une demi-cuvette. La déformation verticale maximale se trouve dans la partie centrale du disque dont est issue la membrane 15.2. Le bord droit B de la membrane 15.2 est déformé et son milieu subit la déformation maximale. La pointe de la flèche montre la zone la plus déformée. Le bord arrondi C est une zone qui ne se déforme pratiquement pas puisqu'il est fixé solidement à la partie fixe 12. L'extrémité 14.1 du bras de torsion 14 qui coopère avec la membrane 15.2 est fixée sensiblement au milieu de son bord droit B. Sur la figure 4C, le dégradé de gris illustre l'amplitude de la déformation, plus le gris est sombre plus la déformation est importante.

Dans le micro-miroir, on a donc deux membranes 15.2 en demi-disque dont les bords droits B se font face. Les deux membranes 15.2 sont sensiblement planes et s'étendent sensiblement dans un même plan lorsqu'elles sont au repos. Elles sont séparées par un espace 17 dans lequel est suspendue la partie mobile 11 par les bras de torsion 14. L'espace 17 s'étend sous la partie mobile 11 pour qu'elle ne soit pas gênée dans son évolution.

L'espace 17 peut être créé par l'intérieur d'une cavité 20 délimitée par la partie fixe 12 et ayant un fond 21 qui fait face à la partie mobile au repos. La structure souple passive 15.2 est fixée à une partie de la partie fixe 12 qui forme des parois 22 de la cavité 20. La profondeur H de la cavité 20 est choisie supérieure à la distance séparant l'axe 13 du bord de la partie mobile 11 qui lui est la plus éloignée. Ainsi la partie mobile 11 ne peut heurter le fond 21 pendant ses évolutions.

En variante, la partie fixe 12 peut être évidée en regard de la partie mobile 11 comme sur la figure 4B. Elle peut prendre sensiblement la forme d'un cadre annulaire fendu ou non fendu. La majeure partie de l'empilement 15.1 est en surplomb par rapport à la partie fixe 12. L'évidement correspondant à l'espace 17.

La figure 4D montre en vue de face un exemple de moyens d'actionnement bimorphe 15 similaires à ceux des figures 4A, 4B. L'encastrement du bord arrondi C de la membrane 15.2 est représenté par des pointillés épais.

Sur les figures 4, les moyens pour appliquer le signal d'excitation ont été omis pour ne pas surcharger les figures. Ces moyens sont fonction du type de signal d'excitation à appliquer et donc du type de matériau actif. On a vu que ce matériau pouvait être piézoélectrique, magnétrostrictif, que ce pouvait être un alliage à mémoire de forme ou un matériau à effet thermique à coefficient d'expansion thermique suffisamment différent de celui de la structure souple passive 15.2.

Il a été montré qu'une déformation d'amplitude maximale, au milieu du bord B, peut être obtenue pour un signal d'excitation donné, si le bord droit B' de la partie en matériau actif 15.3 vaut environ 2/5 du bord B de la structure souple passive 15.2. C'est à cet endroit qu'est fixé le bras de torsion 14.

La figure 5A illustre un autre exemple de micro-miroir selon l'invention.

Les moyens d'actionnement bimorphe 15 comportent toujours, pour chaque bras de torsion 14, un empilement 15.1 plein avec des couches déposées ou rapportées, incluant une partie en matériau actif 15.3 coopérant avec une structure souple passive 15.2. Dans cet exemple, la structure souple passive 15.2 prend la forme d'une poutre dont les deux extrémités 15.21, 15.22 sont fixées à la partie fixe 12. La partie fixe 12 prend la forme d'un cadre, les extrémités 15.21, 15.22 des deux poutres 15 sont encastrées sur des bords opposés du cadre. Les moyens d'excitation 15.4 de la partie en matériau actif 15.3 ont été esquissés, il peut s'agir d'un couple de contacts électriques (ou d'électrodes) prenant en sandwich la partie en matériau actif 15.3 (notamment si elle est de type piézoélectrique), ces contacts étant reliés à une source d'énergie alternative.

Le cadre a été représenté rectangulaire mais d'autres formes sont possibles, il pourrait être circulaire, ovoïde, carré ou autre.

La partie mobile 11 équipée des deux bras de torsion 14 est montée entre les deux poutres 15.2 qui sont sensiblement parallèles. Comme précédemment la fixation de l'extrémité 14.1 d'un bras de torsion 14 à une poutre 15.2 se fait de préférence en un point subissant une forte déformation verticale lorsque la poutre est sollicitée par la partie en matériau actif 15.3 excitée.

Lorsque l'empilement 15.1 des moyens d'actionnement bimorphe 15 est soumis à un champ électrique alternatif dirigé verticalement produit par les moyens d'excitation 15.4, il se met à vibrer verticalement. Il entraîne dans ce mouvement la partie fixe en forme de cadre 12 auquel il est fixé et les bras de torsion 14. L'empilement 15.1 (en forme de poutre) étant fixé par ses extrémités au cadre 12 et le cadre étant rigide, ce dernier ne se déforme pas mais il est seulement entraîné dans son ensemble dans un mouvement de vibration vertical.

Les bras de torsion 14 étant décalés par rapport au centre de masse M de la partie mobile 11, la dissymétrie de la répartition des masses autour de l'axe 13 va générer un couple entraînant la partie mobile 11 dans un mouvement d'oscillation autour de l'axe 13. Le micro-miroir est alors dans un état activé. Il prendra des positions médianes et extrêmes telles que celles des figures 2B à 2D.

Le mouvement d'oscillation de la partie mobile 11 est synchrone avec l'excitation des moyens d'actionnement bimorphe 15. Lorsque l'excitation a une fréquence qui est la fréquence de résonance mécanique de la partie mobile 11 l'amplitude d'oscillation de la partie mobile 11 est maximisée.

Dans cet exemple, c'est la partie centrale de la poutre 15.2 qui subit la forte déformation verticale comme l'indique la pointe de la flèche sur la figure 5B. Sur cette figure, la poutre 15.2 est courbée. Les extrémités 15.21, 15.22 ne sont pas ou pratiquement pas déformées. De la même manière que précédemment le dégradé de gris renseigne sur l'amplitude de la déformation. Cette amplitude de déformation conditionne l'amplitude des oscillations.

La partie mobile 11 est suspendue sensiblement dans la partie centrale du cadre de la partie fixe 12, cette partie correspond à un évidemment et la partie mobile 11 peut donc entrer en oscillation autour de l'axe 13 sans rentrer en collision avec la partie fixe 12.

La partie en matériau actif 15.3 est une couche qui forme l'empilement 15.1 avec la poutre 15.2. Elle recouvre la poutre 15.2 soit totalement soit partiellement. Dans l'exemple de la figure 5A, la couche de matériau actif 15.3 recouvre seulement une partie médiane de la poutre et les deux parties extrêmes de la poutre 15.2 sont à nu. Ces deux parties extrêmes sont sensiblement égales. De manière similaire à la figure 4D, sur la figure 5C, la couche de matériau actif 15.3 est placée sur une zone de la poutre 15.2 subissant une forte déformation. L'encastrement de la poutre à ses deux extrémités 15.21, 15.22 est matérialisé par les pointillés épais.

De la même manière que précédemment, il a été montré que l'amplitude de la déformation de la poutre est maximale en son milieu, pour un signal d'excitation donné, si la partie en matériau actif 15.3 laisse à nu, la poutre au niveau de chacune de ses extrémités, sur environ 1/6 de sa longueur.

Les formes géométriques et les positions relatives des structures souples passives, des parties de matériau actif, des parties fixes et mobiles décrites précédemment ne sont pas limitatives.

Dans ces exemples, la structure souple passive peut être réalisée en matériau semi-conducteur, par exemple en silicium monocristallin, en silicium polycristallin ou autre tout comme la partie mobile, les bras de torsion et la partie fixe. Dans les microsystèmes, le matériau le plus utilisé pour ses qualités est le silicium monocristallin. On peut toutefois envisager que la structure souple passive, les bras de torsion, la partie mobile, la partie fixe soient dans d'autres matériaux dans la mesure où ils sont aptes à être structurés à l'échelle micrométrique. On peut utiliser des matériaux métalliques à base d'or, d'aluminium, de tungstène, d'autres matériaux semi-conducteurs tel que l'arséniure de gallium, des dérivés du silicium tels que le nitrure ou l'oxyde de silicium ou des polymères.... On va maintenant donner des dimensions typiques pour les différentes parties du micro-miroir.

L'envergure et l'épaisseur de la partie mobile 11 sont fixées par la fonction optique de la zone réfléchissante 19. Dans la mesure où la zone réfléchissante occupe toute une face principale de la partie mobile, cette dernière peut avoir une envergure (qui est bien souvent un diamètre) comprise entre environ quelques centaines de micromètres et quelques millimètres. Son épaisseur pourra être de l'ordre de quelques dizaines de micromètres.

La structure souple passive 15.2 doit être suffisamment mince pour être souple, ce qui n'était pas le cas dans l'art antérieur pour le cadre. Elle pourra avoir une épaisseur comprise entre environ quelques micromètres à quelques dizaines de micromètres. Ses dimensions latérales (bord B ou longueur de la poutre) sont typiquement comprises entre environ quelques centaines de micromètres et quelques millimètres. Un compromis doit être trouvé entre épaisseur et dimension latérale pour obtenir la souplesse requise.

L'épaisseur de la partie en matériau actif est déterminée par la technologie de dépôt et par la nature du matériau. Elle sera également mince typiquement comprise entre environ quelques dixièmes de micromètres et quelques micromètres.

Le dimensionnement des bras de torsion permet d'ajuster leur raideur de façon à accorder la fréquence de résonance et donc la fréquence d'oscillation de la partie mobile à une valeur souhaitée.

On va maintenant s'intéresser à un exemple de procédé de fabrication d'un micro-miroir selon l'invention avec des moyens d'actionnement bimorphe. L'exemple décrit s'applique à un matériau actif de type piézoélectrique ou à un matériau actif à effet thermique tel que de l'oxyde de zinc mais le procédé pourrait s'appliquer à d'autres types de matériaux. On peut se reporter aux figures 6A à 6J.

On part d'un substrat 100 formé d'une couche en matériau isolant 102 enterrée entre deux couches de matériau semi-conducteur 101, 103, la couche de matériau semi-conducteur 101 est dite couche de base et la couche de matériau semi-conducteur 103 est dite couche superficielle (figure 6A).

Ce substrat 100 peut être un substrat SOI (abréviation de silicon on insulator, soit silicium sur isolant) avec une couche 102 d'oxyde de silicium enterrée dans un substrat de silicium. Un tel substrat SOI facilite la réalisation de la partie mobile qui se trouve suspendue à la partie fixe.

On va réaliser dans un premier temps les moyens d'actionnement bimorphe et tout particulièrement la partie en matériau actif et éventuellement les moyens d'excitation s'ils sont solidaires du substrat. La structure souple passive sera formée dans la couche semi-conductrice superficielle.

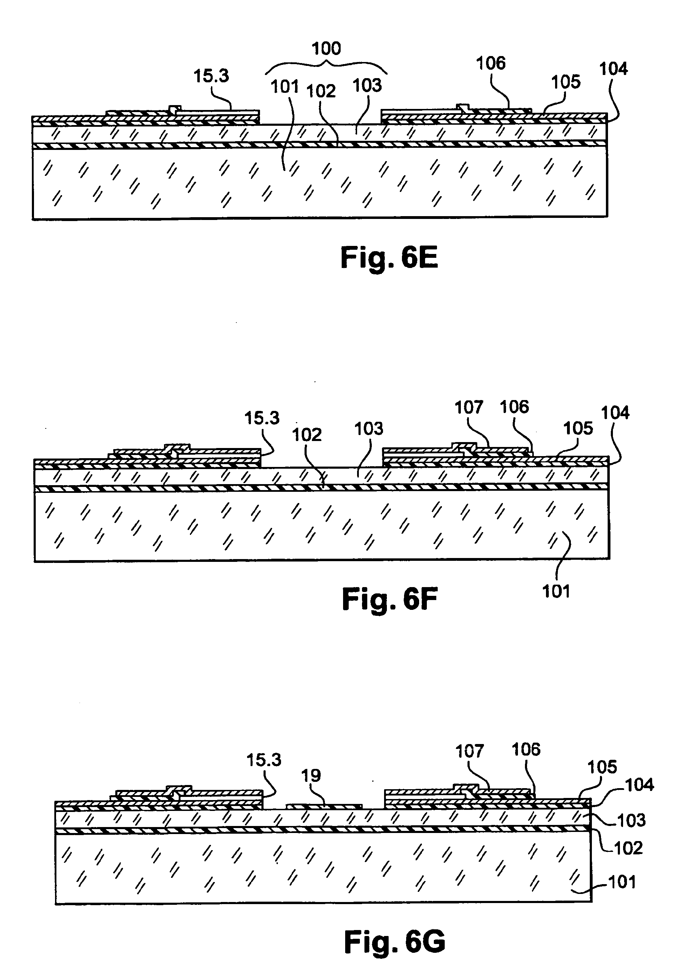

Dans l'exemple des figures 6, la partie en matériau actif, qu'elle soit piézoélectrique ou à effet thermique, de chacun des empilements va être est prise en sandwich entre un couple d'électrodes qui va contribuer à réaliser l'excitation. Dans le cas du matériau piézoélectrique, les électrodes vont contribuer à établir le champ électrique d'excitation. Dans le cas du matériau thermique, elles vont permettre le passage d'un courant électrique dans la partie en matériau actif de manière à provoquer son échauffement par effet Joule. Ces électrodes sont à isoler électriquement du matériau semi-conducteur. Dans un couple d'électrodes, on définit une électrode inférieure (première) réalisée en premier et une électrode supérieure (seconde) réalisée ensuite. En conséquence, pour obtenir cette isolation, on effectue une base isolante 104 sous chacune des électrodes inférieures.

Pour cela on réalise une couche isolante sur la couche semi-conductrice superficielle 103. Cette couche isolante formera la base isolante 104 sous chaque électrode inférieure une fois modelée au contour de l'électrode inférieure qui elle est formée ultérieurement. La couche isolante 104 peut être par exemple réalisée par dépôt chimique en phase vapeur d'oxyde ou de nitrure de silicium ou autre. Le contour de la base isolante 104 peut être réalisé par exemple par gravure réactive ionique ou gravure humide à l'acide fluorhydrique ou autre. En variante, la base isolante 104 peut être réalisée par une oxydation thermique du matériau semi-conducteur de la couche semi-conductrice superficielle 103 suivie d'une gravure par exemple de même type que celles citées précédemment (figure 6B).

On réalise ensuite une électrode inférieure 105 sur chaque base isolante 104. Il peut s'agir par exemple d'une étape de dépôt par évaporation, pulvérisation ou dépôt électrolytique d'un matériau métallique. Ce matériau métallique peut être par exemple à base d'aluminium dans le cas du matériau actif à effet thermique, à base d'or ou de platine dans le cas du matériau actif piézoélectrique. Cette étape de dépôt est suivie d'une étape de gravure pour délimiter le contour de chaque électrode inférieure 105 (figure 6C). L'épaisseur des électrodes inférieures 105 est typiquement de l'ordre de quelques dixièmes de micromètres. Ce dépôt métallique a aussi pour fonction de favoriser l'accroche du matériau actif qui va être déposé ensuite.

L'étape suivante est une étape de réalisation, pour chaque empilement, de la partie en matériau actif. Dans l'exemple décrit, il s'agit de matériau piézoélectrique ou de matériau à effet thermique 15.3. On dépose le matériau actif par exemple par un procédé de pulvérisation cathodique ou de dépôt en phase vapeur d'organo-métalliques et on le grave par exemple avec une solution à base d'acide fluorhydrique et d'acide chlorhydrique pour délimiter le contour de chaque partie 15.3 en matériau actif (figure 6D). Le matériau actif ne recouvre pas entièrement chaque électrode inférieure 105, car il faut ensuite accéder aux électrodes pour leur appliquer les signaux d'excitation. Le matériau piézoélectrique peut être par exemple du PZT et le matériau à effet thermique de l'oxyde de zinc. Son épaisseur est typiquement de l'ordre du micromètre.

Dans un couple d'électrodes, l'électrode supérieure doit être isolée électriquement de l'électrode inférieure. Une seconde base isolante 106 va être réalisée aux endroits où l'électrode supérieure (réalisée ultérieurement) risque de surmonter l'électrode inférieure 105 (figure 6E). La seconde base isolante 106 est réalisée de préférence de la même manière que la première base isolante 104.

Les première et seconde bases isolantes 104, 106 doivent avoir une épaisseur suffisante pour assurer l'isolation électrique entre les électrodes inférieure et supérieure d'un couple. Avec de l'oxyde de silicium, leur épaisseur est supérieure à environ 0,2 micromètre, si la tension d'excitation à appliquer entre les électrodes d'un couple est inférieure à 100 Volts.

Une électrode supérieure 107 est réalisée sur chaque seconde base isolante 106. On peut procéder de la même manière que pour l'électrode inférieure 105 (figure 6F). Son épaisseur est sensiblement la même que celle de l'électrode inférieure. Sa composition, dans le cas du matériau actif piézoélectrique, est sensiblement la même que celle de l'électrode inférieure. Dans le cas du matériau actif à effet thermique, elle peut être réalisée à base d'or.

On peut réaliser la zone réfléchissante 19 de la partie mobile. Il peut s'agir par exemple d'un dépôt par évaporation, pulvérisation, ou d'un dépôt électrolytique d'un matériau réfléchissant par exemple à base d'or, d'aluminium ou autre. Une opération de gravure par exemple par gravure réactive ionique, par gravure humide avec de l'acide phosphorique ou autre permet de délimiter son contour (figure 6G). Le dépôt du matériau réfléchissant est facultatif, la surface de la couche semi-conductrice superficielle 103 peut servir telle quelle de zone réfléchissante si son état de surface le permet.

On délimite ensuite par gravure par exemple RIE (abréviation anglo-saxonne de Reactive Ion Etching soit gravure réactive ionique) le contour de la partie mobile 11, des bras de torsion 13 et de chaque structure souple passive 15.2. Ces éléments sont situés dans la couche semi-conductrice superficielle 103 et donc la gravure attaque cette couche semi-conductrice superficielle 103 et la couche isolante 102 enterrée sert d'arrêt (figure 6H).

On va ensuite réaliser l'espace 17 autour de la partie mobile 11, des bras de torsion 14 et sous une partie des structures souples passives 15.2. Cela revient à libérer la partie mobile 11, les bras de torsion 14 et les structures souples passives 15.2. On grave la couche semi-conductrice de base 101 et la couche isolante 102 enterrée de manière anisotrope, par voie humide ou sèche. L'attaque se fait à partir de la face de la couche semi-conductrice de base 101 non recouverte par la couche isolante enterrée 102. Ce qui reste de couche semi-conductrice de base 101 et de couche isolante 102 enterrée sert de partie fixe 12 (figure 6I). Durant cette opération, on prévoit de protéger la face du micro-miroir du côté des moyens d'actionnement bimorphe et de la zone réfléchissante 19 avec une résine, cette dernière est ensuite ôtée.

Il ne reste plus qu'à tester le fonctionnement du micro-miroir, en appliquant une tension sinusoïdale V entre les électrodes inférieure 105 et supérieure 107 d'au moins un couple et en surveillant le mouvement de la partie mobile 11 (figure 6J).

Un avantage d'un tel micro-miroir est qu'il peut être fabriqué en totalité de manière collective avec d'autres sur un même substrat, ce qui n'était pas le cas auparavant. Cela fait que son coût est abaissé par rapport à celui des micro-miroirs conventionnels. Un autre avantage est que la structure passive est vraiment souple, mince et fragile, le dépôt ou le report de la partie en matériau actif et le retrait partiel de la couche semi-conductrice de base ne risque pas de la détériorer.

De tels moyens d'actionnement bimorphe permettent de faire osciller la partie mobile de micro-miroir avec une amplitude importante tout en conservant une partie réfléchissante de bonne qualité.

Les termes « haut », « bas », « inférieur », « supérieur », « horizontal », « vertical » et autres sont applicables aux modes de réalisation montrés et décrit en relation avec les figures. Ils sont employés uniquement pour les besoins de la description et ne s'appliquent pas nécessairement à la position prise par le micro-miroir lorsqu'il est en fonctionnement.

## Revendications

1. Micro-miroir comprenant une partie mobile (11) avec une zone réfléchissante (19), une partie fixe (12), deux bras de torsion (14) issus de la partie mobile (11) matérialisant un axe (13) autour duquel la partie mobile (11) est apte à osciller, cet axe (13) étant sensiblement parallèle à un plan principal de la partie mobile (11) et passant par la partie mobile (11) en étant décalé par rapport au centre de masse (M) de la partie mobile, chaque bras de torsion (13) ayant une extrémité reliée à la partie fixe (12) par l'intermédiaire de moyens d'actionnement bimorphe (15), **caractérisé en ce que** les moyens d'actionnement bimorphe (15) comportent, pour chaque bras de torsion (13), un empilement plein (15.1) avec des couches déposées ou rapportées incluant une partie en matériau actif (15.3), apte à changer de volume et/ou de forme sous l'effet d'une excitation, et une structure souple passive (15.2), la partie en matériau actif (15.3) et la structure souple passive (15.2) coopérant sans espace entre elles, la partie en matériau actif (15.3) recouvrant partiellement la structure souple passive.

2. Micro-miroir selon la revendication 1, dans lequel le matériau actif est un matériau piézoélectrique, un matériau magnétostrictif, un matériau à effet thermique ayant un coefficient d'expansion thermique suffisamment différent de celui du matériau de la structure souple passive, un alliage à mémoire de forme.

3. Micro-miroir selon l'une des revendications 1 ou 2, dans lequel les moyens d'actionnement bimorphe (15) incluent des moyens d'excitation (15.4) de la partie en matériau actif (15.3), tels que des électrodes, au moins une résistance thermique un aimant ou un bobinage.

4. Micro-miroir selon l'une des revendications 1 à 3, dans lequel un bras de torsion (14) est relié à la structure souple passive (15.2).

5. Micro-miroir selon la revendication 4, dans lequel la liaison du bras de torsion (14) à la structure souple passive (15.2) se fait dans une zone à forte déformation sous l'effet du changement de volume et/ou de forme de la partie en matériau actif (15.3) induit par l'excitation.

6. Micro-miroir selon la revendication 5, dans lequel le recouvrement se fait dans une zone à forte déformation de la structure souple passive (15.2) lorsqu'il est partiel.

7. Micro-miroir selon l'une des revendications 1 à 6, dans lequel la structure souple passive (15.2) prend la forme d'une membrane fixée à la partie fixe (12) par au moins une portion de bord (C) et ayant au moins une autre portion de bord (B) libre sur laquelle est fixé un bras de torsion (14).

8. Micro-miroir selon la revendication 7, dans lequel la membrane (15.2) est sensiblement un demi-disque avec un bord arrondi (C) et un bord droit (B), le bord droit (B) étant libre et le bord arrondi (C) étant fixé à la partie fixe (12).

9. Micro-miroir selon la revendications 8, dans lequel la partie en matériau actif (15.3) est sensiblement en forme de demi-disque avec un bord droit (B') sensiblement aligné et centré sur celui de la membrane (15.2).

10. Micro-miroir selon la revendication 9, dans lequel le bord droit (B') du demi-disque de la partie en matériau actif (15.3) vaut environ 2/5 du bord droit (B) de la membrane (15.2).

11. Micro-miroir selon l'une des revendications 1 à 6, dans lequel la structure souple passive (15.2) prend la forme d'une poutre dont les extrémités (15.21, 15.22) sont fixées à la partie fixe (12), un bras de torsion (14) étant fixé sensiblement dans une zone centrale de la poutre (15.2).

12. Micro-miroir selon la revendication 11, dans lequel la partie en matériau actif (15.3) occupe la zone centrale de la poutre (15.2) en laissant à nu, chaque extrémité, sur environ 1/6 de la longueur de la poutre.

13. Procédé de réalisation d'un micro-miroir selon l'une des revendications précédentes, **caractérisé en ce qu'**il comporte les étapes suivantes :
a) réalisation pour chaque bras de torsion (14), sur une couche semi-conductrice superficielle (103) d'un substrat semi-conducteur (100) formé d'une couche isolante (102) enterrée entre une couche semi-conductrice de base (101) et la couche semi-conductrice superficielle (103), de la partie en matériau actif (15.3) associée éventuellement aux moyens d'excitation (15.4),
b) délimitation, par gravure dans la couche semi-conductrice superficielle (103), du contour de la partie mobile (11), des bras de torsion (14), de la structure souple passive (15.2) en s'arrêtant sur la couche isolante enterrée (102), la partie en materiau actif (15.3) recouvrant partiellement la structure souple passive (15.2),
c) élimination de la couche semi-conductrice de base (101) et de la couche isolante enterrée (102) sous et autour de la partie mobile (11), des bras de torsion (14) et sous une partie de la structure souple passive (15.2) de manière à libérer la partie mobile (11) et les bras de torsion (14), à autoriser une déformation de la structure souple passive (15.2) et à créer la partie fixe (12) dans le reste de la couche semi-conductrice de base (101) et de la couche isolante enterrée (102).

14. Procédé selon la revendication 13, dans lequel on réalise la zone réfléchissante (19) sur la couche semi-conductrice superficielle (103), par dépôt d'un matériau réfléchissant et délimitation de son contour, avant l'étape b).

15. Procédé selon l'une des revendications 13 ou 14, dans lequel, lorsque le matériau actif est piézoélectrique ou à effet thermique, on réalise en tant que moyens d'excitation (15.4), une première électrode (105) entre la couche semi-conductrice superficielle (102) et la partie en matériau actif (15.3), et une seconde électrode (107) au-dessus de la partie en matériau actif (15.3).

16. Procédé selon la revendication 15, dans lequel on insère une base isolante (104) entre la première électrode (105) et la couche semi-conductrice superficielle (103).

17. Procédé selon l'une des revendications 16 ou 17, dans lequel on insère une autre base isolante (106) entre la première électrode (105) et la seconde électrode (107) pour les isoler l'une de l'autre.

## Claims

1. Micromirror comprising a mobile part (11) with a reflecting area (19), a fixed part (12), two torsion arms (14) originating from the mobile part (11) materializing an axis (13) about which the mobile part (11) can oscillate, this axis (13) being approximately parallel to a principal plane of the mobile part (11) and passing through the mobile part (11) while being offset from the centre of mass (M) of the mobile part, each torsion arm (13) having one end connected to the fixed part (12) through bimorph actuation means (15), **characterized in that** the bimorph actuation means (15) comprise a solid stack (15.1) with deposited or add-on layers for each torsion arm (13), including a part (15.3) made of an active material capable of changing volume and/or shape under the effect of an excitation, and a passive flexible structure (15.2), the active material part (15.3) and the passive flexible structure (15.2) cooperating in spaceless manner with one another, the active material part (15.3) partly covering the passive flexible structure.

2. Micromirror according to claim 1, in which the active material is a piezoelectric material, a magnetostrictive material, a thermal effect material with a coefficient of thermal expansion sufficiently different from the coefficient of thermal expansion of the material from which the passive flexible structure is made, or a shape memory alloy.

3. Micromirror according to either of claim 1 or 2, in which bimorph actuation means (15) include means of excitation (15.4) of the part (15.3) made of an active material, such as electrodes, at least one thermal resistor, a magnet or a coil.

4. Micromirror according to one of claims 1 to 3, in which a torsion arm (14) is connected to the passive flexible structure (15.2).

5. Micromirror according to claim 4, in which the connection between the torsion arm (14) and the passive flexible structure (15.2) is made in an area with a strong deformation under the effect of the volume and/or shape change of the part (15.3) made of an active material, induced by excitation.

6. Micromirror according to claim 5, in which the overlap is made in an area with a strong deformation of the passive flexible structure (15.2) when it is partial.

7. Micromirror according to any one of claims 1 to 6, in which the passive flexible structure (15.2) is in the form of a membrane fixed to the fixed part (12) through at least one edge portion (C) and with at least one other free edge portion (B) on which a torsion arm (14) is fixed.

8. Micromirror according to claim 7, in which the membrane (15.2) is approximately a half-disk with a rounded edge (C) and a straight edge (B), the straight edge (B) being free and the rounded edge (C) being fixed to the fixed part (12).

9. Micromirror according to claim 8, in which the part (15.3) made of an active material is approximately in the form of a half-disk with a straight edge (B') approximately in line with and centred on the straight edge of the membrane (15.2).

10. Micromirror according to claim 9, in which the length of the straight edge (B') of the half-disk of the part (15.3) made of an active material is equal to about 2/5 of the length of the straight edge (B) of the membrane (15.2).

11. Micromirror according to one of the claims 1 to 6, in which the passive flexible structure (15.2) is in the form of a beam, the ends (15.21, 15.22) of which are fixed to the fixed part (12), a torsion arm (14) being fixed approximately in a central area of the beam (15.2).

12. Micromirror according to claim 11, in which the part (15.3) made of an active material occupies the central area of the beam (15.2) leaving each end exposed over about 1/6 of the length of the beam.

13. Method for making a micromirror according to one of the previous claims, **characterized in that** it includes the following steps:
a) for each torsion arm (14), production of the part (15.3) made of an active material associated with excitation means (15.4) (if any) on a surface semiconducting layer (103) of a semiconducting substrate (100) formed from an insulating layer (102) buried between a base semiconducting layer (101) and the surface semiconducting layer (103),
b) delimitation of the contour of the mobile part (11), the torsion arms (14), and the passive flexible structure (15.2) by etching in the surface semiconducting layer (103), and stopping on the buried insulating layer (102), the active material part (15.3) partly covering the flexible passive structure (15.2),
c) elimination of the base semiconducting layer (101) and the insulating layer (102) buried under and around the mobile part (11), the torsion arms (14) and under part of the passive flexible structure (15.2) so as to release the mobile part (11) and the torsion arms (14), to authorize deformation of the passive flexible structure (15.2) and create the fixed part (12) in the remainder of the base semiconducting layer (101) and the buried insulating layer (102).

14. Method according to claim 13, in which the reflecting area (19) is made on the surface semiconducting layer (103) by depositing a reflecting material and delimiting its contour, before step b).

15. Method according to claim 13 or 14, in which when the active material is a piezoelectric or thermal effect material, the excitation means (15.4) is a first electrode (105) between the surface semiconducting layer (102) and the part made of an active material (15.3), and a second electrode (107) above the part made of an active material (15.3).

16. Method according to claim 15, in which an insulating base (104) is inserted between the first electrode (105) and the surface semiconducting layer (103).

17. Method according to claim 15 or 16, in which another insulating base (106) is inserted between the first electrode (105) and the second electrode (107) to isolate them from each other.

## Patentansprüche

1. Mikrospiegel mit einem eine reflektierende Zone (19) umfassenden beweglichen Teil (11), einer festen Zone (12), zwei von dem beweglichen Teil ausgehenden Torsionsarmen (14), die eine Achse (13) definieren, um die herum der bewegliche Teil (11) oszillieren kann, wobei diese Achse (13) im wesentlichen parallel ist zu einer Hauptebene des beweglichen Teils (11) und ihr Verlauf durch den bewegliche Teil versetzt ist in Bezug auf den Masseschwerpunkt (M) des beweglichen Teils, und jeder Torsionsarm (14) ein Ende hat, das mit dem festen Teil (12) durch bimorphe Betätigungseinrichtungen (15) verbunden ist,
**dadurch gekennzeichnet, dass** die bimorphen Betätigungseinrichtungen (15) für jeden Torsionsarm (14) einen vollen Stapel (15.1) mit abgeschiedenen oder aufgetragenen Schichten umfasst, die einen Teil aus aktivem Material (15.3), fähig unter der Einwirkung einer Erregung das Volumen und/oder die Form zu verändern, und eine passive nachgiebige Struktur (15.2) enthalten, wobei der Teil aus aktivem Material (15.3) und die passive nachgiebige Struktur (15.2) ohne Zwischenraum miteinander kooperieren und der Teil aus aktivem Material (15.3) die nachgiebige passive Struktur partiell überdeckt.

2. Mikrospiegel nach Anspruch 1, bei dem das aktive Material ein piezoelektrisches Material, ein magnetoresistives Material, ein Material mit Thermoeffekt, dessen Wärmedehnungskoeffizient sich ausreichend von dem des Materials der passiven nachgiebigen Struktur unterscheidet, eine Formgedächtnislegierung ist.

3. Mikrospiegel nach einem der Ansprüche 1 oder 2, bei dem die bimorphen Betätigungseinrichtungen (15) Erregungseinrichtungen (15.4) des Teils aus aktivem Material (15.3) umfassen, zum Beispiel Elektroden, mindestens einen Thermowiderstand, einen Magnet oder eine Spule.

4. Mikrospiegel nach einem der Ansprüche 1 bis 3, bei dem ein Torsionsarm (14) mit der passiven nachgiebigen Struktur (15.2) verbunden ist.

5. Mikrospiegel nach Anspruch 4, bei dem der Torsionsarm (14) mit der passiven nachgiebigen Struktur (15.2) in einer Zone verbunden ist, die sich unter der Einwirkung der durch die Erregung erzeugten Volumen- und oder Formveränderung des aktiven Materials (15.3) stark verformt.

6. Mikrospiegel nach Anspruch 5, bei dem die Überdeckung, wenn sie partiell ist, sich in einer Zone starker Verformung der passiven nachgiebigen Struktur (15.2) befindet.

7. Mikrospiegel nach einem der Ansprüche 1 bis 6, bei dem die passive nachgiebige Struktur (15.2) die Form einer Membran aufweist, die an dem festen Teil (12) durch mindestens ein Randstück (C) befestigt ist und mindestens ein weiteres, freies Randstück (B) aufweist, an dem ein Torsionsarm (14) befestigt ist.

8. Mikrospiegel nach Anspruch 7, bei dem die Membran (15.2) im wesentlichen eine Halbscheibe mit einem runden Rand (C) und einem geraden Rand (B) ist, wobei der gerade Rand (B) frei ist und der runde Rand (C) an dem festen Teil (12) befestigt ist.

9. Mikrospiegel nach Anspruch 8, bei dem der Teil aus aktivem Material (15.3) im wesentlichen die Form einer Halbscheibe mit einem geraden Rand (B') hat, der im wesentlichen auf denjenigen der Membran (15.2) ausgerichtet und zentriert ist.

10. Mikrospiegel nach Anspruch 9, bei dem der gerade Rand (B') der Halbscheibe des Teils aus aktivem Material (15.3) ungefähr 2/5 des geraden Rands (B) der Membran (15.2) ausmacht.

11. Mikrospiegel nach einem der Ansprüche 1 bis 6, bei dem die passive nachgiebige Struktur (15.2) die Form eines Trägers aufweist, dessen Enden (15.21, 15.22) an dem festen Teil (12) befestigt sind, wobei ein Torsionsarm (14) im wesentlichen in einer zentralen Zone des Trägers (15.2) befestigt ist.

12. Mikrospiegel nach Anspruch 11, bei dem der Teil aus aktivem Material (15.3) die zentrale Zone des Trägers (15.2) einnimmt, wobei an jedem Ende ungefähr 1/6 der Länge des Trägers frei bleibt.

13. Herstellungsverfahren eines Mikrospiegels nach einem der vorangehenden Ansprüche,
**dadurch gekennzeichnet, dass** es die folgenden Schritte umfasst:
a) Realisierung - für jeden Torsionsarm (14) auf einer Halbleiteroberflächenschicht (103) - eines Halbleitersubstrats (100), gebildet durch eine Isolierschicht (102), vergraben zwischen einer Halbleitergrundschicht (101) und der Halbleiteroberflächenschicht (103) -, des Teils aus aktivem Material (15.3), der eventuell mit den Erregungseinrichtungen (15.4) verbunden ist;
b) Abgrenzung - durch Ätzung in der Halbleiteroberflächenschicht (103) -, der Kontur des beweglichen Teils (11), der Torsionsarme (14), der passiven nachgiebigen Struktur (15.2), wobei man auf der vergrabenen Isolierschicht (102) anhält, und der Teil aus aktivem nachgiebigem Material (15.3) die passive nachgiebige Struktur (15.2) partiell überdeckt;
c) Eliminierung der Halbleitergrundschicht (101) und der vergrabenen Schicht (102) unter dem beweglichen Teil (11) und den Torsionsarmen (14) und darum herum, und unter einem Teil der passiven nachgiebigen Struktur (15.2), um das bewegliche Teil (11) und die Torsionsarme (14) frei zu machen, eine Verformung der passiven nachgiebigen Struktur (15.2) zu ermöglichen und den festen Teil (12) in der restlichen Halbleitergrundschicht (101) und der vergrabenen Isolierschicht (102) zu realisieren.

14. Verfahren nach Anspruch 13, in dem man in der Halbleiteroberflächenschicht (103) die Reflexionszone (19) herstellt, indem man vor dem Schritt b) ein reflektierendes Material abscheidet und seine Kontur abgrenzt.

15. Verfahren nach einem der Ansprüche 13 oder 14, in dem man, wenn das aktive Material piezoelektrisch ist oder eines mit Thermoeffekt, als Erregungseinrichtungen (15.4) eine erste Elektrode (105) zwischen der Halbleiteroberflächenschicht (102) und dem Teil aus aktivem Material (15.3) und eine zweite Elektroden (107) über dem Teil aus aktivem Material (15.3) realisiert.

16. Verfahren nach Anspruch 15, in dem man zwischen der ersten Elektrode (105) und der Halbleiteroberflächenschicht (103) eine Isolationsbasis (104) einfügt.

17. Verfahren nach einem der Ansprüche 16 oder 17, in dem man zwischen der ersten Elektrode (105) und der zweiten Elektrode (107), um sie voneinander zu isolieren, eine weitere Isolationsbasis (106) einfügt.
